# FASCICULE DE BREVET EUROPEEN

(11) **EP 0 737 846 B1**
(45) Date de publication et mention de la délivrance du brevet: **26.07.2000**
(21) Numéro de dépôt: 96400742.1
(22) Date de dépôt: 05.04.1996
(51) Int. Cl.: G01C 23/00, G05D 1/06

(54) **Dispositif optoélectrique d'aide au pilotage d'un aéronef par mauvaise visibilité**
Optoelektrische Vorrichtung zur Unterstützung der Führung eines Flugzeuges bei schlechter Sicht
Optoelectric device to aid piloting of an aircraft in bad visibility

(30) Priorité: 13.04.1995 FR 9504458
(43) Date de publication de la demande: 16.10.1996
(73) Titulaire: THOMSON-CSF SEXTANT, 78141 Vélizy Villacoublay (FR)
(72) Inventeur: Coirier, Philippe, 92402 Courbevoie Cedex (FR); Goujon, Alain, Allende 94117 Arcueil CEDEX (FR); Léger, Alain, Allende 94117 Arcueil CEDEX (FR)
(74) Mandataire: Beylot, Jacques

(56) Documents cités:
- EP-A- 0 044 777
- WO-A-92/01906
- US-A- 3 786 505
- US-A- 4 305 057

## Description

La présente invention concerne les dispositifs optoélectroniques d'aide au pilotage d'un aéronef utilisables par mauvaise visibilité au décollage et en cas d'interruption d'approche par remise de gaz.

Les dispositifs optoélectroniques d'aide au pilotage d'un aéronef comme par exemple décrits dans WO-A-92/01906, EP-A-0 044 777 et US-A-4 305 057, consistent en des collimateurs ou visualisations tête-haute permettant de présenter devant les yeux d'un pilote d'aéronef, avion ou d'hélicoptère, des informations graphiques et alphanumériques projetées sur une optique semi-réfléchissante et superposées à la vue du monde extérieur. La vue du monde extérieur peut être soit directe, soit faire appel à un capteur en fournissant une image vidéo présentée dans le collimateur.

Les performances obtenues à l'aide de ces dispositifs optoélectroniques d'aide au pilotage dépendent directement des caractéristiques visuelles des divers symboles présentés au pilote tant pour la capacité de surveillance globale de la situation que pour la précision des manoeuvres effectuées manuellement.

Les paramètres couramment représentés dans les collimateurs peuvent être regroupés en différentes familles :
- éléments du "T basique" de la planche de bord (attitude, cap, vitesse, altitude),
- éléments proches de ceux du "T basique" (nombre de Mach, vitesse verticale (variomètre), radio-altitude),
- éléments liés à la trajectoire (vecteur vitesse, accélération, pente totale),
- éléments de radionavigation de zone (RNAV) (VOR, ILS, DME),
- éléments de guidage (en attitude, en trajectoire),
- éléments complémentaires de contrôle de situation (consignes explicites (route, cap etc.), écarts par rapport à des consignes (vitesse etc.), indications de modes de fonctionnement, alarmes diverses etc.).

Dans le domaine de l'aviation civile, les collimateurs sont utilisés principalement pour des phases de vol d'atterrissage, de roulage et de décollage par mauvaise visibilité. Ils permettent une réduction des minima opérationnels de visibilité et/ou augmentent la sécurité des opérations grâce à une capacité accrue de surveillance de la situation. Ils apportent de même une précision accrue de contrôle de la trajectoire en condition de vol à vue.

La présente invention a pour but d'améliorer les performances d'un collimateur utilisé en phase de montée initiale au décollage ou en cas d'interruption d'approche par remise de gaz, afin d'augmenter le niveau de surveillance de la situation en général et le suivi de la trajectoire en particulier (route et pente), même en cas de panne moteur.

Elle a pour objet un dispositif optoélectronique d'aide au pilotage d'un aéronef pourvu d'une centrale de navigation déterminant, entre autres, les assiettes longitudinale et latérale, et d'un collimateur affichant une ligne d'horizon artificielle donnant une référence d'assiette latérale et de pente nulle, et un symbole fixe constitué d'une maquette avion donnant une référence longitudinale de l'aéronef. Ce dispositif est remarquable en ce qu'il comporte des moyens d'affichage sur le collimateur de deux échelles de pente pour le décollage et la remise de gaz, inclinées symétriquement selon les branches d'un X posé sur la ligne d'horizon artificielle et se croisant à une valeur d'assiette longitudinale dite de sécurité à tenir en cas de panne moteur.

Avantageusement, les deux échelles de pente pour le décollage et la remise de gaz sont graduées tous les 2,5 degrés et s'étendent sur 20 degrés de pente au dessus de la ligne d'horizon artificielle.

Avantageusement, le dispositif optoélectronique d'aide au pilotage comporte également des moyens d'affichage, sur le collimateur, d'un horizon local accroché au symbole fixe de la maquette avion.

Avantageusement, l'horizon local lié au symbole fixe de la maquette avion est constitué de deux segments de droite qui sont alignés et symétriques par rapport au centre de la maquette avion et qui s'inclinent pour rester parallèles à la ligne d'horizon artificiel.

Avantageusement, le dispositif optoélectronique d'aide au pilotage comporte aussi des moyens d'affichage, sur le collimateur, de deux index qui repèrent l'assiette longitudinale de sécurité et qui sont solidaires et parallèles à la ligne d'horizon artificielle, disposés de chaque côté du symbole fixe de la maquette avion au niveau de l'assiette longitudinale de sécurité et destinés à se positionner sur l'horizon local lorsque l'assiette longitudinale de l'aéronef se confond avec l'assiette longitudinale de sécurité.

Avantageusement, les deux index repérant l'assiette longitudinale de sécurité sont espacés latéralement de la longueur des deux segments de droite de l'horizon local.

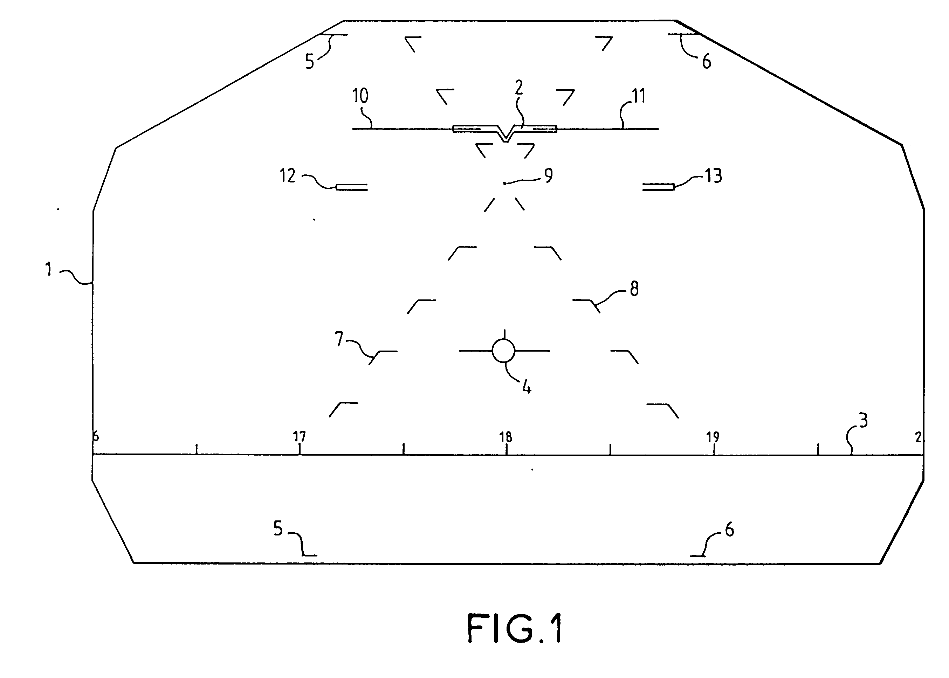

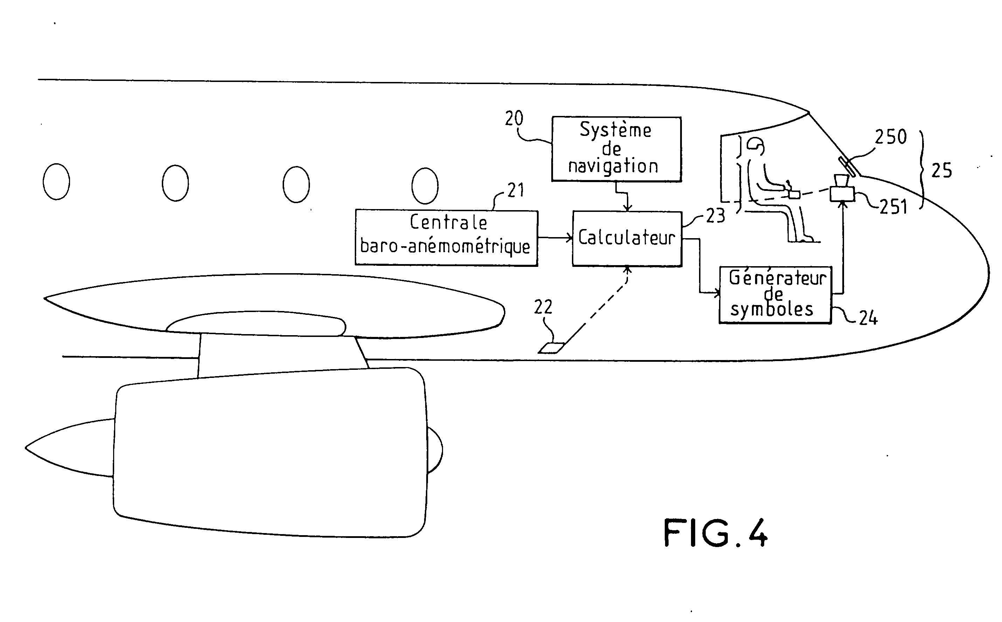

D'autres caractéristiques et avantages de l'invention ressortiront de la description ci-après d'un mode de réalisation donné à titre d'exemple. Cette description sera faite en regard du dessin dans lequel :
- des figures 1, 2 et 3 sont des représentations d'écrans de collimateur sur lesquels apparaissent différents symboles graphiques dont ceux affichés par un dispositif selon l'invention, cela dans différentes conditions de vol d'un avion ; et
- une figure 4 est un schéma illustrant l'architecture générale d'un dispositif selon l'invention à bord d'un avion.

Un collimateur se présente sous la forme d'un écran transparent 1 au travers duquel le pilote regarde à l'extérieur. Sur cet écran transparent 1 sont projetés différents symboles alphanumériques et graphiques destinés à faciliter le pilotage. Par soucis de clarté, les symboles alphanumériques ne sont pas représentés sur les figures 1, 2 et 3. qui ne comportent que des symboles graphiques, soit usuels, soit provenant d'un dispositif d'affichage selon l'invention. Parmi les symboles usuels, on distingue une maquette avion 2 fixe matérialisant l'axe de référence longitudinal du fuselage de l'avion, une ligne d'horizon artificielle 3 mobile, graduée en échelle de cap, qui se déplace sous les indications du système de navigation, un cercle ailé mobile 4 représentant l'extrémité du vecteur vitesse sol de l'avion, c'est-à-dire la direction de la tangente à sa trajectoire, et deux échelles verticales de pente 5 et 6 qui sont tracées de part et d'autre de la maquette avion 2 perpendiculairement à la ligne d'horizon artificielle 3 et constituées de tirets horizontaux superposés, espacés de 5 degrés de pente. Dans les figures 1, 2 et 3 les deux échelles verticales de pentes 5 et 6 sont supprimées dans une plage de 0 à 20 degrés de pente positive pour faire place à des symboles graphiques plus expressifs projetés par le dispositif d'affichage selon l'invention qui sont :
- un premier symbole graphique constitué de deux échelles de pente 7 et 8 pour le décollage et la remise de gaz, inclinées symétriquement selon les branches d'un X posé sur la ligne d'horizon artificielle 3 et se croisant à l'aplomb de la maquette avion 2 en un point 9 correspondant à une valeur d'assiette longitudinale dite de sécurité à tenir en cas de panne moteur,
- un deuxième symbole graphique constitué de deux demi-droites 10 et 11 attachées à la maquette avion 2 et parallèles à la ligne d'horizon artificielle 3, constituant une référence horizontale locale, et
- un troisième symbole graphique constitué de deux index 12 et 13 en forme de U allongés et couchés, séparés de l'envergure des deux demi-droites 10 et 11 de la ligne d'horizon locale, se présentant leurs ouvertures en vis à vis et placés à un même niveau au-dessus de la ligne d'horizon artificielle 3, à une hauteur correspondant à l'assiette longitudinale de sécurité à laquelle se croisent les deux échelles de pente 7 et 8 pour le décollage et la remise de gaz.

Chaque échelle de pente 7 et 8 pour le décollage et la remise de gaz comprend un repère tous les 2,5 degrés de pente entre l'assiette 0 degré (horizon) et + 20 degrés, sous la forme de deux tirets accolés, l'un horizontal parallèle à la ligne d'horizon artificiel 3 et l'autre oblique, suivant la ligne de pente de l'échelle.

La distance entre les repères des deux échelles de pente 7 et 8 pour le décollage et la remise de gaz affectés à un même échelon évolue linéairement de façon décroissante pour converger par valeurs inférieures ou supérieures vers l'assiette de sécurité à tenir en cas de panne moteur (13 degrés sur les figures 1 à 3). L'effet de convergence est renforcé par les ailettes obliques des repères. La distance séparant les repères à +2,5 degrés des deux échelles de pente 7 et 8 pour le décollage et la remise de gaz correspond à celle séparant les deux index 12 et 13 du troisième symbole graphique repérant l'assiette longitudinale de sécurité.

Les échelles de pente 7 et 8 pour le décollage et la remise de gaz en cas d'interruption d'approche facilitent, en cas de panne d'un moteur, l'acquisition puis le maintien de l'assiette de sécurité grâce à une bonne perception de la vitesse de variation de l'assiette longitudinale à partir de la vitesse apparente de défilement de leurs repères par rapport à la maquette avion 2. En outre, elles donnent une information fine d'assiette longitudinale par repérage de la position relative de la maquette avion 2 par rapport à leurs repères. Elles sont totalement compatibles avec les procédures de vol sans panne moteur et sont présentées à chaque décollage ou remise de gaz après interruption d'une approche.

L'horizon local constitué des deux demi-droites 10 et 11 attachées à la maquette avion 2 et parallèles à la ligne d'horizon artificiel 3 permet au pilote de l'aéronef de mieux assurer le contrôle de la gîte quand son attention est plus particulièrement portée au voisinage de la maquette avion 2, loin de la ligne d'horizon artificiel 3, ce qui est le cas lors d'un décollage ou d'une remise de gaz.

L'horizon local 10, 11 est centré et tourne en fonction de l'angle de gîte autour du symbole maquette avion 2 qui est fixe en axes collimateur. Associé aux échelles de pente 7 et 8 pour le décollage et la remise de gaz qui sont attachées à la ligne d'horizon artificiel 3, il permet avec la maquette avion 2 d'estimer et de contrôler les angles d'assiettes longitudinale et de gîte.

Les deux index 12 et 13 du troisième symbole graphique repérant l'assiette longitudinale de sécurité à laquelle se croisent les deux échelles de pente 7 et 8 de décollage et de remise de gaz permettent au pilote de bien voir la position relative des deux demi-droites 10 et 11 de l'horizon local par rapport à l'assiette longitudinale de sécurité.

Ainsi, le pilote trouve, groupés autour de la maquette avion 2, tous les éléments pour apprécier la situation et en déduire les actions pour maintenir l'appareil dans le domaine de vol désiré en cas de décollage ou de remise de gaz. Cela offre une solution élégante pour résoudre le problème de transition et de changement de référence de pilotage (aller et retour) entre le vecteur vitesse sol 4 qui permet d'estimer l'orientation de la trajectoire de l'aéronef et la maquette avion 2 qui permet de connaître l'attitude de l'aéronef. Cette transition, si elle s'effectue de façon naturelle en décollage sans panne moteur, devient beaucoup plus délicate à gérer sans cette nouvelle symbologie, par exemple si une panne moteur intervient lors d'une remise de gaz interrompant une approche ILS (Instrument Landing System en langue anglo-saxonne).

L'avion est en effet à ce moment très près du sol (moins de 50 pieds en catégorie d'atterrissage tout temps lllB) et la panne moteur peut induire (sur un bimoteur par exemple) une embardée assez importante en gîte et en route, alors que la prise d'assiette longitudinale doit assurer dans le même temps une pente donc une vitesse verticale positive.

En outre, dans ces phases critiques de vol, l'aspect temporel du contrôle de l'avion par l'équipage devient crucial et la nouvelle symbologie qui vient d'être décrite présente les avantages d'augmenter le niveau global de surveillance de la situation, d'améliorer la capacité de réaction du pilote et de faciliter les transitions nécessaires entre les centres d'intérêt de la symbologie. Elle permet en particulier au pilote en utilisant d'abord les demi-droites 10 et 11 de l'horizon local, puis les échelles de pentes 7 et 8 de décollage et de remise de gaz :
- d'anticiper toute évolution en gîte près du sol, liée par exemple à une panne moteur,
- de contrôler la cadence de rotation en assiette longitudinale,
- d'anticiper l'arrivée à l'assiette longitudinale de sécurité afin d'éviter des oscillations et une valeur excessive d'incidence,
- de gérer facilement la transition du vecteur vitesse sol 4 vers la maquette avion 2 pour stabiliser l'attitude de l'avion, ainsi que la transition inverse quand la gîte et l'assiette longitudinale sont stabilisés pour contrôler la trajectoire de l'avion.

En cas de la remise de gaz automatique en l'absence de panne moteur, le pilote doit surveiller la situation et vérifier que la rotation d'assiette longitudinale et la mise en montée de l'avion sont bien exécutées normalement par le pilote automatique. Pour cela, il contrôle l'assiette longitudinale et la gîte grâce aux nouveaux symboles graphiques affichés.

Pour le contrôle de l'assiette longitudinale, il doit voir monter le symbole maquette avion 2 vers les index 12, 13 repérant l'assiette longitudinale de sécurité et les dépasser pour atteindre une assiette longitudinale supérieure à celle recommandée en cas de panne moteur, avec une vitesse de déplacement convenable appréciée à partir de la vitesse de défilement des repères des échelles de pente 7 et 8 pour le décollage et la remise de gaz.

Pour le contrôle de la gîte, l'inclinaison de l'horizon local 10, 11 par rapport à la maquette avion 2 lui montre le travail du pilote automatique autour de l'axe de roulis.

Pour les autres fonctions telles que le contrôle de la trajectoire en pente et en route et le contrôle du domaine de vol aérodynamique, le pilote utilise les symboles graphiques et alphanumériques habituels. Il doit voir le vecteur vitesse sol 4 monter au-dessus de la ligne d'horizon artificiel 3, à l'aplomb de la route de consigne.

En cas d'une remise de gaz manuelle par suite d'une alarme due ou non à une panne du système automatique de contrôle du vol mais consécutive à une panne de moteur, le pilote doit atteindre l'assiette longitudinale de sécurité et contrôler la gîte.

Pour atteindre l'assiette longitudinale de sécurité, il s'aide de la maquette avion 2 qui doit monter vers les index 12, 13 repérant l'assiette longitudinale de sécurité, sans les dépasser, avec une vitesse convenable appréciée par le défilement des repères des échelles de pente 7 et 8 pour le décollage et la remise de gaz.

Pour le contrôle de la gîte, il se repère sur l'inclinaison de l'horizon local 10, 11 par rapport à la maquette avion 2.

Dans le cas ou le pilote voit le sol autour de la piste, il peut s'assurer en plus de l'évitement d'éventuels obstacles grâce à la position relative du vecteur vitesse sol 4 par rapport à ceux-ci.

La figure 1 a été tracée pour une situation opérationnelle correspondant à une montée au décollage avec tous les moteurs opérationnels. L'avion vole à gîte nulle, ailes à plat, comme le montrent les demi-droites 10 et 11 de l'horizon local qui sont parfaitement alignées avec les ailes de la maquette avion 2. Son assiette longitudinale est supérieure à l'assiette longitudinale de sécurité en cas de panne moteur repérée par les index 12 et 13. Elle est ici de +15,5 degrés alors que la consigne d'assiette longitudinale de sécurité est de +13 degrés. La position relative du vecteur vitesse sol 4 par rapport aux échelles de pente 7 et 8 pour le décollage et la remise de gaz permet de voir que l'avion monte suivant une pente positive de 5 degrés. La position relative du symbole "Vecteur vitesse sol" 4 par rapport à la ligne d'horizon artificiel 3 et à son échelle de cap permet de voir que l'avion suit une route au 180.

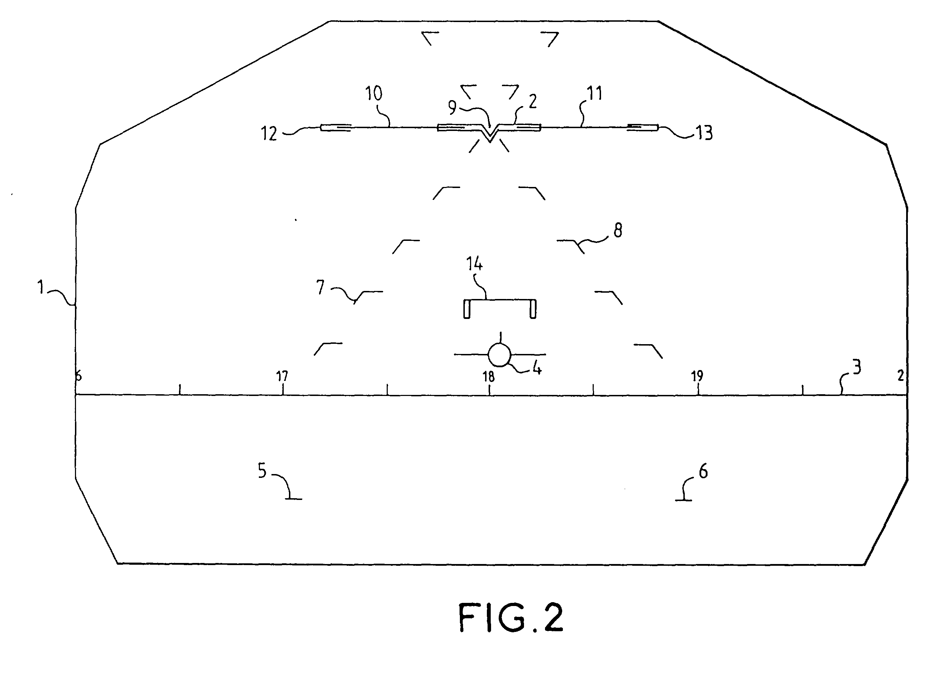

La figure 2 a été tracée pour une situation opérationnelle correspondant à une montée en remise de gaz avec une panne moteur. L'avion vole encore à gîte nul comme le montrent les demi-droites 10 et 11 de l'horizon local qui sont alignées avec les ailes de la maquette avion 2. Mais son assiette longitudinale est maintenant juste égale à l'assiette longitudinale de sécurité car au-delà, il ne pourrait maintenir sa vitesse de consigne. La position relative du vecteur vitesse sol 4 par rapport aux échelles de pente 7 et 8 pour le décollage et la remise de gaz permet de voir que l'avion monte avec une pente faible mais positive de 2 degrés. La position relative du vecteur vitesse sol 4 par rapport à la ligne d'horizon artificielle 3 et à son échelle de cap montre que l'avion suit encore mais approximativement une route au 180.

On distingue sur cette figure 2 un nouveau symbole graphique 14 qui n'apparaît que lorsque l'avion est dans une configuration de vol proche du décrochage et qui est formé d'un segment de droite repérant un angle limite de pente que le vecteur vitesse ne doit pas franchir pour éviter un décrochage. Ce symbole graphique 14 montre que l'avion vole dans une configuration aérodynamique marginale, à 2,5 degrés environ de son incidence de décrochage.

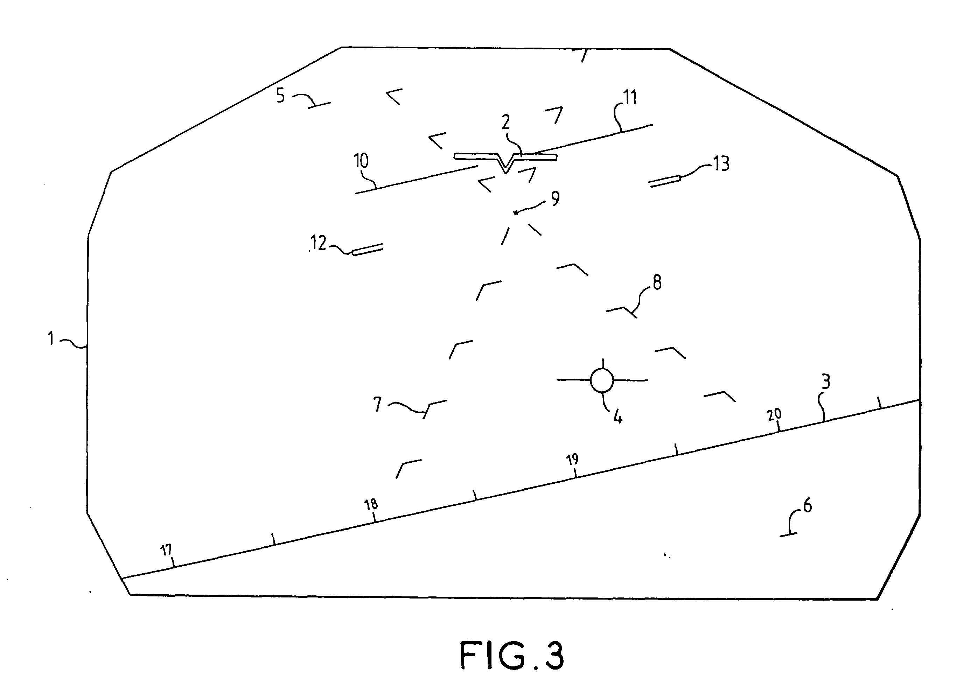

La figure 3 a été tracée pour une situation opérationnelle analogue à celle de la figure 1, correspondant à une montée au décollage avec tous les moteurs opérationnels et virage entamé sur la droite. L'avion vole avec une gîte à droite comme le montre l'inclinaison sur la gauche des deux demi-droites 10 et 11 de l'horizon local par rapport aux ailes de la maquette avion 2 et plus généralement l'inclinaison sur la gauche de la ligne d'horizon artificiel 3 ainsi que des échelles de pente 7 et 8 pour le décollage et la remise de gaz et des index 12 et 13 repérant l'assiette longitudinale de sécurité qui sont liés à la ligne d'horizon artificielle 3. Son assiette longitudinale est supérieure à l'assiette longitudinale de sécurité. Elle est ici, comme dans la figure 1, de + 15,5 degrés alors que l'assiette longitudinale de sécurité est de + 13 degrés. La position relative du vecteur vitesse sol 4 par rapport aux échelles de pente 7 et 8 pour le décollage et la remise de gaz montre que l'avion monte selon une pente positive de 5 degrés. la position relative du vecteur vitesse sol 4 par rapport à la ligne d'horizon artificiel 3 et à son échelle de cap montre que l'avion suit une route instantanée au 192. En fait la fixité de la figure ne permet pas de montrer le déplacement de l'échelle de cap vers la gauche sur la ligne d'horizon artificiel 3 consécutif à la mise en virage à droite de l'avion.

La figure 4 illustre l'architecture générale d'un équipement installé à bord d'un avion pour afficher aux yeux du pilote les symboles graphiques des figures 1 à 3. L'avion dont on distingue la partie avant avec le poste de pilotage, est équipé d'un système de navigation 20 et d'un système de mesure baro-anémométrique avec une centrale baro-anémométrique 21 et une sonde d'incidence 22, reliés par un calculateur 23 et un générateur de symbole 24 à un collimateur 25.

Le système de navigation 20 fournit les indications habituelles dont, notamment, le cap, le vecteur vitesse relative par rapport au sol, l'assiette longitudinale et la gîte.

Le collimateur 25 comprend un écran transparent 250 qui est placé devant les yeux du pilote, en superposition avec le paysage, et sur lequel un dispositif de projection 251 vient afficher les différents symboles alphanumériques et graphiques relatifs au pilotage dont ceux représentés aux figures 1 à 3.

Le dispositif de projection 251 est piloté par le générateur de symbole 24 qui reçoit des commandes de mise à jour du calculateur 23 à logique programmée relié au système de navigation 20 et au système de mesure baro-anémométrique 21, 22.

## Revendications

1. Dispositif optoélectronique d'aide au pilotage d'un aéronef pourvu d'un système de navigation (20) déterminant, entre autres, les assiettes longitudinale et latérale, et d'un collimateur (25) affichant une ligne d'horizon artificielle (3) donnant une référence d'assiette latérale et de pente nulle, et un symbole fixe constitué d'une maquette avion (2) donnant une référence longitudinale de l'aéronef caractérisé en ce qu'il comporte des moyens d'affichage sur le collimateur de deux échelles de pente (7, 8) pour le décollage et la remise de gaz, inclinées symétriquement selon les branches d'un X posé sur la ligne d'horizon artificielle (3) et se croisant à une valeur (9) d'assiette longitudinale dite de sécurité à tenir en cas de panne moteur.

2. Dispositif selon la revendication 1, caractérisé en ce qu'il comporte en outre des moyens d'affichage sur le collimateur d'un horizon local (10, 11) accroché à la maquette d'avion (2).

3. Dispositif selon la revendication 2, caractérisé en ce qu'il comporte en outre des moyens d'affichage sur le collimateur de deux index (12, 13) qui repèrent l'assiette longitudinale de sécurité et qui sont solidaires et parallèles à la ligne d'horizon artificielle (3), disposés de chaque côté de la maquette avion (2) au niveau de l'assiette longitudinale de sécurité et destinés à se positionner sur l'horizon local (10, 11) lorsque l'assiette longitudinale de l'aéronef se confond avec l'assiette longitudinale de sécurité.

4. Dispositif selon la revendication 1, caractérisé en ce que les deux échelles de pente (7, 8) pour le décollage et la remise de gaz sont graduées tous les 2,5 degrés de pente.

5. Dispositif selon la revendication 1, caractérisé en ce que les deux échelles de pente (7, 8) s'étendent sur 20 degrés de pente au dessus de la ligne d'horizon artificielle (3).

6. Dispositif selon la revendication 1, caractérisé en ce que les repères de chaque échelle de pente (7, 8) pour le décollage et la remise de gaz sont constitués de deux tirets accolés, l'un horizontal et parallèle à la ligne d'horizon artificiel (3), et l'autre oblique suivant la ligne de pente de l'échelle.

7. Dispositif selon la revendication 2, caractérisé en ce que les moyens d'affichage d'un horizon local affichent deux segments de droites (10, 11) alignés, symétriques par rapport au centre du symbole maquette avion (2) et parallèles à la ligne d'horizon artificiel (3).

8. Dispositif selon les revendications 3 et 7, caractérisé en ce que les moyens d'affichage des deux index (12, 13) affichent sur le collimateur deux index (12, 13) espacés latéralement de la longueur des deux segments de droite (10, 11) de l'horizon local.

9. Dispositif selon la revendication 3, caractérisé en ce que les moyens d'affichage des deux index (12, 13) affichent sur le collimateur deux index (12, 13) en forme de U allongés et couchés se présentant leurs ouvertures en vis à vis et placés à un même niveau au-dessus de la ligne d'horizon artificielle (3), à une hauteur correspondant à l'assiette longitudinale de sécurité à laquelle se croisent les deux échelles de pente (7, 8) pour le décollage et la remise de gaz.

10. Dispositif selon les revendications 8 et 9, caractérisé en ce que les deux index (12, 13) repérant l'assiette longitudinale de sécurité viennent entourer les extrémités extérieures des deux demi-droites (10, 11) de l'horizon local lorsque l'assiette longitudinale de l'aéronef correspond à l'assiette longitudinale de sécurité.

## Patentansprüche

1. Optoelektronische Vorrichtung zur Unterstützung der Fluglagenregelung eines Flugzeugs, das versehen ist mit einem Navigationssystem (20), das unter anderem die longitudinalen und lateralen Trimmungen bestimmt, sowie mit einem Kollimator (25), der eine künstliche Horizontlinie (3), die eine Referenz der lateralen Trimmung mit Neigung null angibt, sowie ein festes Symbol anzeigt, das ein Flugzeugmodell (2) bildet, das eine longitudinale Referenz des Flugzeugs angibt, dadurch gekennzeichnet, daß sie Mittel für die Anzeige zweier Neigungsskalen (7, 8) auf dem Kollimator zum Abheben und zum Wiedergasgeben, die längs der Schenkel eines auf der künstlichen Horizontlinie (3) stehenden X symmetrisch geneigt sind und sich bei einem Wert (9) der longitudinalen Trimmung kreuzen, der Sicherheitswert genannt wird, der bei einem Motorausfall einzuhalten ist.

2. Vorrichtung nach Anspruch 1, dadurch gekennzeichnet, daß sie außerdem Mittel zum Anzeigen eines mit dem Flugzeugmodell (2) gekoppelten lokalen Horizonts (10, 11) auf dem Kollimator enthält.

3. Vorrichtung nach Anspruch 2, dadurch gekennzeichnet, daß sie außerdem Mittel enthält zum Anzeigen zweier Indizes (12, 13) auf dem Kollimator, die die longitudinale Sicherheitstrimmung bezeichnen, mit der künstlichen Horizontlinie (3) fest verbunden und zu dieser parallel sind, beiderseits des Flugzeugmodells (2) auf Höhe der longitudinalen Sicherheitstrimmung angeordnet sind und dazu vorgesehen sind, am lokalen Horizont (10, 11) angeordnet zu werden, wenn die longitudinale Trimmung des Flugzeugs mit der longitudinalen Sicherheitstrimmung zur Deckung kommt.

4. Vorrichtung nach Anspruch 1, dadurch gekennzeichnet, daß die beiden Neigungsskalen (7, 8) für das Abheben und das Wiedergasgeben durch jeweils 2,5 Neigungsgrad unterteilt sind.

5. Vorrichtung nach Anspruch 1, dadurch gekennzeichnet, daß sich die beiden Neigungsskalen (7, 8) über 20 Neigungsgrad über der künstlichen Horizontlinie (3) erstrecken.

6. Vorrichtung nach Anspruch 1, dadurch gekennzeichnet, daß die Markierungen jeder Neigungsskala (7, 8) zum Abheben und Wiedergasgeben aus zwei zusammengefügten Strichen gebildet sind, wovon einer horizontal und zur künstlichen Horizontlinie (3) parallel ist und der andere längs einer Linie der Neigungsskala schräg orientiert ist.

7. Vorrichtung nach Anspruch 2, dadurch gekennzeichnet, daß die Mittel zur Anzeige eines lokalen Horizonts zwei aufeinander ausgerichtete Geradensegmente (10, 11) anzeigen, die in bezug auf die Mitte des Flugzeugmodell-Symbols symmetrisch und zur künstlichen Horizontlinie (3) parallel sind.

8. Vorrichtung nach den Ansprüche 3 und 7, dadurch gekennzeichnet, daß die Mittel zur Anzeige der beiden Indizes (12, 13) auf dem Kollimator zwei Indizes (12, 13) anzeigen, die seitlich um die Länge der beiden Geradensegmente (10, 11) des lokalen Horizonts beabstandet sind.

9. Vorrichtung nach Anspruch 3, dadurch gekennzeichnet, daß die Mittel zur Anzeige der beiden Indizes (12, 13) auf dem Kollimator zwei Indizes (12, 13) jeweils in Form eines langgestreckten und auf die Seite gelegten U anzeigen, deren Öffnungen einander zugewandt sind und die auf demselben Niveau oberhalb der künstlichen Horizontlinie (3) auf einer der longitudinalen Sicherheitstrimmung entsprechenden Höhe, auf der sich die beiden Neigungsskalen (7, 8) zum Abheben und Wiedergasgeben kreuzen, angeordnet sind.

10. Vorrichtung nach den Ansprüchen 8 und 9, dadurch gekennzeichnet, daß die beiden Indizes (12, 13), die die longitudinale Sicherheitstrimmung markieren, die äußeren Enden der beiden Halbgeraden (10, 11) des lokalen Horizonts umgeben, wenn die longitudinale Trimmung des Flugzeugs der longitudinalen Sicherheitstrimmung entspricht.

## Claims

1. Optoelectronic device for assistance in the piloting of an aircraft provided with a navigation system (20) defining, inter alia, the pitch and roll attitudes, and with a collimator (25) which displays an artificial skyline (3) giving a roll attitude and zero slope reference, and a fixed symbol constituted by an aircraft model (2) giving a longitudinal reference of the aircraft, characterised in that it comprises means for displaying, on the collimator, two slope scales (7, 8) for take-off and wave-off manoeuvres, inclined symetrically along the arms of an X laid on the artificial skyline (3) and intersecting at a value (9) of pitch attitude known as the safety pitch attitude to be maintained in the event of engine failure.

2. Device according to claim 1, characterised in that it further comprises means for displaying, on the collimator, a local horizon (10, 11) locked into the aircraft model (2).

3. Device according to claim 2, characterised in that it further comprises means for displaying, on the collimator, two indicators (12, 13) that identify the safety pitch attitude and are a fixed distance apart and are parallel to the artificial skyline (3), arranged on each side of the aircraft model (2) at the level of the safety pitch attitude and designed to be positioned on the local horizon (10, 11) when the pitch attitude of the aircraft is the same as the safety pitch attitude.

4. Device according to claim 1, characterised in that the two slope scales (7, 8) for take-off and wave-off manoeuvres are graduated at every 2.5 degrees of slope.

5. Device according to claim 1, characterised in that the two slope scales (7, 8) extend over 20 degrees of slope above the artificial skyline (3).

6. Device according to claim 1, characterised in that the markers of each slope scale (7, 8) for take-off and wave-off manoeuvres are formed by two dashes joined to each other, one horizontal and parallel to the artificial skyline (3) and the other oblique along the slope line of the scale.

7. Device according to claim 2, characterised in that the means for displaying a local horizon display two aligned straight-line segments (10, 11) that are symmetrical relative to the centre of the aircraft model symbol (2) and parallel to the artificial skyline (3).

8. Device according to claims 3 and 7, characterised in that the means for displaying the two indicators (12, 13) display, on the collimator, two indicators (12, 13) spaced laterally apart by the length of the two straight-line segments (10, 11) of the local horizon.

9. Device according to claim 3, characterised in that the means for displaying the two indicators (12, 13) display, on the collimator, two elongated and reclining U-shaped pointers (12, 13) which have their apertures facing one another and are placed at one and the same level above the artificial skyline (3), at a height corresponding to the safety pitch attitude at which the two slope scales (7, 8) for take-off and wave-off intersect.

10. Device according to claims 8 and 9, characterised in that the two indicators (12, 13) identifying the safety pitch attitude surround the external ends of the two half-lines (10, 11) of the local horizon when the pitch attitude of the aircraft corresponds to the safety pitch atitude.
